# EUROPÄISCHE PATENTSCHRIFT

(11) **EP 1 878 551 B1**
(45) Veröffentlichungstag und Bekanntmachung des Hinweises auf die Patenterteilung: **11.07.2012**
(21) Anmeldenummer: 07009880.1
(22) Anmeldetag: 18.05.2007
(51) Int. Cl.: B29C 31/00, B29C 31/08, B29C 37/00, B29C 43/34

(54) **Vorrichtung und Verfahren zum Transportieren eines Materialstrangs**
Device and process for conveying an extrudate
Dispositif et procédé de transport d'un extrudat

(30) Priorität: 14.07.2006 DE 102006032830
(43) Veröffentlichungstag der Anmeldung: 16.01.2008
(73) Patentinhaber: Schmidt & Heinzmann GmbH & Co. KG, 76646 Bruchsal (DE)
(72) Erfinder: Brüssel, Richard, 75056 Sulzfeld (DE)
(74) Vertreter: Daub, Thomas

(56) Entgegenhaltungen:
- EP-A- 0 412 867
- EP-A- 1 386 709
- WO-A-03/026878
- DE-A1- 3 330 505
- DE-A1- 4 026 337
- DE-C1- 19 542 717
- GB-A- 1 170 640
- US-A- 4 551 362
- DATABASE WPI Week 200105 Derwent Publications Ltd., London, GB; AN 2001-040887 XP002457286 & WO 00/66339 A (KYOWA HAKKO KOGYO KK) 9. November 2000 (2000-11-09)

## Beschreibung

### Stand der Technik

Die Erfindung betrifft eine Vorrichtung und ein Verfahren zum Transportieren eines Materialstrangs gemäß den Merkmalen der unabhängigen Ansprüche 1, 4.

Die Erfindung betrifft weiterhin eine alternative Vorrichtung und ein alternatives Verfahren gemäß den Merkmalen der unabhängigen Ansprüche 9, 12.

Es ist bereits eine Vorrichtung zum Transportieren eines Materialstrangs bekannt, insbesondere eines dünnen und klebrigen Kunststoffstrangs, die eine Transporteinheit zum Transportieren des Materialstrangs aufweist. Zudem verfügt die Vorrichtung zum Transportieren des Materialstrangs über eine Ausbringeinheit, die ein Trennpulver direkt auf einen Transportgurt der Transporteinheit aufbringt, siehe EP-A-1 386 709. Aus der EP-A-0 412 867 ist bekannt, eine Vorrichtung zum Transportieren eines Bandes vorzusehen, wobei ein Antihaltmittel auf die Oberfläche des Bandes aufgebracht wird.

Der Erfindung liegt insbesondere die Aufgabe zugrunde, eine erfindungsgemäße Vorrichtung bereitzustellen, die eine Reduzierung einer klebrigen Eigenschaft einer Oberfläche des Materialstrangs ermöglicht. Sie wird gemäß der Erfindung durch die Merkmale des Anspruchs 1 gelöst. Weitere Ausgestaltungen ergeben sich aus den Nebenansprüchen und den Unteransprüchen.

### Vorteile der Erfindung

Die Erfindung geht aus von einer Vorrichtung zum Transportieren eines Materialstrangs, insbesondere eines dünnen und klebrigen Kunststoffstrangs, mit einer Transporteinheit zum Transportieren des Materialstrangs und einer Ausbringeinheit für ein Trennpulver.

Es wird vorgeschlagen, dass die Ausbringeinheit dazu vorgesehen ist, das Trennpulver direkt auf eine Unterseite des Materialstrangs aufzubringen, wodurch vorteilhaft ein Ankleben des Materialstrangs, wie insbesondere ein Ankleben des dünnen und klebrigen Kunststoffstrangs, an einem Transportgurt der Transporteinheit sicher vermieden werden kann. Dabei soll unter einer "Unterseite eines Materialstrangs" insbesondere die Seite des Materialstrangs verstanden werden, deren Oberfläche auf dem zum Transport des Materialstrangs erforderlichen Transportgurt der Transporteinheit aufliegt. Das Trennpulver wird an der Unterseite des Materialstrangs vor einem Aufliegen des Materialstrangs auf dem Transportgurt der Transporteinheit aufgebracht. Eine Haftung des Trennpulvers an der Unterseite des Materialstrangs wird dabei vorteilhaft durch eine klebrige Eigenschaft des Materials erzielt. Zweckmäßigerweise ist das Trennpulver gegenüber dem Transportgurt der Transporteinheit antihaftend, so dass eine besonders einfache Trennung zwischen dem Transportgurt und dem Materialstrang erzielt werden kann. Mittels des Trennpulvers können beispielsweise Schaufelbleche, die zur Weiterverarbeitung den Materialstrang vom Transportgurt der Transporteinheit abnehmen und weitertransportieren, den Materialstrang ohne Materialverluste handhaben. Der Materialstrang wird vorzugsweise von einem Kunststoffstrang gebildet, insbesondere von einem faserverstärkten und aufgeschmolzenen Thermoplast und/oder einem flüssigen Harz, wie beispielsweise einem Duroplast, was zu einer klebrigen Oberfläche des Materialstrangs führt.

Des Weiteren wird vorgeschlagen, dass die Ausbringeinheit zumindest eine Düse aufweist, die das Trennpulver auf die Unterseite des Materialstrangs aufsprüht, wodurch eine fein verteilte und gleichmäßig dicke Schicht des Trennpulvers auf der Unterseite des Materialstrangs erreicht werden kann. Zudem kann durch das Aufsprühen des Trennpulvers ein vorteilhaft einfaches Anbringen an der Unterseite des Materialstrangs erzielt werden.

Eine unerwünschte Abkühlung des Materialstrangs kann vermieden und eine Verformbarkeit des Materialstrangs kann beibehalten werden, wenn die Ausbringeinheit dazu vorgesehen ist, das Trennpulver vor Aufsprühen auf die Unterseite des Materialstrangs zu erwärmen. Materialstränge, wie insbesondere Kunststoffstränge aus Thermoplasten, sind nur innerhalb eines bestimmten Temperaturbereichs verformbar bzw. verarbeitbar, so dass mittels des erwärmt aufgesprühten Trennpulvers eine Temperatur des Materialsstrangs kaum verändert bzw. unverändert bleibt. Vorteilhafterweise wird das Trennpulver dabei auf die Temperatur des Materialstrangs erwärmt. Grundsätzlich kann jedoch auch auf eine Erwärmung des Trennpulvers verzichtet werden, wie insbesondere bei einem Materialstrang aus Duroplast.

In einer weiteren Ausgestaltung der Erfindung wird ein Verfahren nach Anspruch 4 zum Transportieren eines Materialstrangs, insbesondere eines dünnen und klebrigen Kunststoffstrangs, mit einer Vorrichtung zum Transportieren eines Materialstrangs vorgeschlagen, wobei ein Trennpulver direkt auf eine Unterseite des Materialstrangs aufgebracht wird. Hierbei kann vorteilhaft ein Ankleben des Materialstrangs, wie insbesondere des dünnen und klebrigen Kunststoffstrangs, an einem Transportgurt der Transporteinheit vermieden werden, indem das Trennpulver an der Unterseite des Materialstrangs haftet, bevor der Materialstrang auf dem Transportgurt der Transporteinheit aufliegt.

Ferner wird vorgeschlagen, dass das Trennpulver zusammen mit einer Fluidisierungsluft erwärmt wird, wodurch vorteilhaft eine Feuchtigkeitsbildung beim Erwärmen des Trennpulvers vermieden werden kann. Zudem kann hierbei einer Klumpenbildung des Trennpulvers entgegengewirkt werden, da mittels der Fluidisierungsluft das Trennpulver zusammen mit der Fluidisierungsluft ein gleichmäßiges und fein verteiltes Fluid bilden kann.

Eine besonders fein verteilte Trennpulverschicht an der Unterseite des Materialstrangs und eine einfache Dosierung des Trennpulvers beim Aufsprühen können erreicht werden, wenn das Trennpulver zusammen mit der Fluidisierungsluft auf die Unterseite des Materialstrangs aufgesprüht wird. Zudem kann hierdurch eine gleichmäßig dicke Trennpulverschicht an der Unterseite des Materialstrangs erreicht werden. Alternativ oder zusätzlich sind jedoch auch weitere, dem Fachmann als sinnvoll erscheinende Verfahren zum Aufbringen des Trennpulvers an der Unterseite des Materialstrangs denkbar.

Vorteilhafterweise wird ein Material des Trennpulvers einem Material, insbesondere einem Füllstoffmaterial des Materialstrangs, angepasst, wodurch Materialeigenschaften des Materialstrangs von Eigenschaften des Trennpulvers unbeeinflusst bleiben. Unter "angepasst" soll dabei insbesondere verstanden werden, dass zumindest einzelne Bestandteile übereinstimmend ausgeführt sind. In diesem Zusammenhang soll unter einem "Füllstoffmaterial" ein Material verstanden werden, das als Füllstoff einem Stoffgemisch zu dessen Volumenerhöhung beigegeben wird, ohne dabei die Eigenschaften des Stoffgemischs wesentlich zu verändern. Grundsätzlich sind jedoch auch weitere, dem Fachmann als sinnvoll erscheinende Materialien als Trennpulver denkbar, wie beispielsweise Talk, Calciumcarbonat usw., die die Eigenschaften des Strangmaterials unverändert bzw. nahezu unverändert lassen.

Des Weiteren wird vorgeschlagen, dass das Trennpulver zusammen mit dem Materialstrang weiterverarbeitet wird, wodurch eine Trennung von Materialstrang und Trennpulver vermieden werden kann und somit zusätzliche Produktionskosten eingespart werden können. Es kann beispielsweise das Trennpulver in den Materialstrang durch Anpressen integriert werden und somit vorteilhaft ein gemeinsamer Strang erzielt werden und/oder es kann das Trennpulver zusammen mit dem Materialstrang beispielsweise vorteilhaft geschnitten werden. Alternativ oder zusätzlich sind weitere, dem Fachmann als sinnvoll erscheinende Verarbeitungsprozesse des Materialstrangs zusammen mit der Trennlage denkbar.

In einer alternativen Ausgestaltung der Erfindung wird eine Vorrichtung nach Anspruch 9 zum Transportieren eines Materialstrangs, insbesondere eines dünnen und klebrigen Kunststoffstangs, mit einer Transporteinheit zum Transportieren des Materialstrangs und einer Ausbringeinheit vorgeschlagen, wobei die Ausbringeinheit dazu vorgesehen ist, eine Trennlage an einer Unterseite des Materialstrangs anzubringen. Hierdurch kann vorteilhaft ein Ankleben des Materialstrangs, wie insbesondere des dünnen und klebrigen Kunststoffstrangs, an einem zum Transport und/oder zur Auflage des Materialstrangs vorgesehenen Bauteil vermieden werden. Eine Haftung der Trennlage an der Unterseite des Materialstrangs wird dabei vorteilhaft durch eine klebrige Eigenschaft des Materialstrangs erzielt.

Des Weiteren wird vorgeschlagen, dass die Ausbringeinheit dazu vorgesehen ist, die Trennlage zwischen der Unterseite des Materialstrangs und der Transporteinheit anzubringen, wodurch ein Ankleben des Materialstrangs an einem Transportgurt der Transporteinheit vermieden werden kann. Vorteilhafterweise ist die Trennlage gegenüber dem Transportgurt der Transporteinheit antihaftend, so dass eine besonders einfache Trennung zwischen dem Transportgurt und dem Materialstrang erreicht werden kann. Die Trennlage kann dabei zuerst auf den Transportgurt aufgelegt werden, und dann kann der Materialstrang auf die Trennlage oder die Trennlage zuerst mit der Unterseite des Materialstrangs kontaktiert werden und anschließend zusammen mit dem Materialstrang auf den Transportgurt der Transporteinheit gelegt werden.

Vorteilhafterweise ist die Ausbringeinheit dazu vorgesehen, die Trennlage erwärmt zwischen der Unterseite des Materialstrangs und der Transporteinheit anzubringen, wodurch ein unerwünschtes Abkühlen des Materialstrangs vermieden und eine Verformbarkeit des Materialstrangs beibehalten werden kann. Vorteilhafterweise wird die Trennlage auf eine Temperatur des Materialstrangs erwärmt, so dass die Temperatur bzw. die Verformbarkeit des Materialsstrangs durch Aufbringen der Trennlage unbeeinflusst bleibt.

Ferner wird ein Verfahren nach Anspruch 12 zum Transportieren eines Materialstrangs, insbesondere eines dünnen und klebrigen Materialstrangs, insbesondere mit einer Vorrichtung zum Transportieren eines Materialstrangs, vorgeschlagen, wobei eine Trennlage an einer Unterseite des Materialstrangs angebracht wird. Hierdurch kann vorteilhaft ein Ankleben des Materialstrangs, wie insbesondere des dünnen und klebrigen Kunststoffstrangs, an einem zum Transport und/oder zur Auflage des Materialstrangs vorgesehenen Bauteil vermieden werden. Eine Haftung der Trennlage an der Unterseite des Materialstrangs wird dabei vorteilhaft durch eine klebrige Eigenschaft des Materialstrangs erzielt.

Vorteilhafterweise wird die Trennlage erwärmt zwischen der Unterseite des Materialstrangs und der Transporteinheit angebracht, wodurch ein unerwünschtes Abkühlen des Materialstrangs nach Kontakt mit der Trennlage vermieden werden kann und so der Materialstrang eine zu einer Weiterverarbeitung vorteilhafte Temperatur beibehalten kann. Grundsätzlich kann jedoch auch auf eine Erwärmung der Trennlage verzichtet werden, wie insbesondere bei einem Materialstrang aus Duroplast.

Zudem können vorteilhaft Materialeigenschaften des Materialstrangs von Eigenschaften der Trennlage unbeeinflusst bleiben, wenn ein Material der Trennlage einem Material, insbesondere einem Füllstoffmaterial des Materialstrangs, angepasst wird. Unter "angepasst" soll dabei insbesondere verstanden werden, dass zumindest einzelne Bestandteile übereinstimmend ausgeführt sind. In diesem Zusammenhang soll unter einem "Füllstoffmaterial" ein Material verstanden werden, das als Füllstoff einem Stoffgemisch zu dessen Volumenerhöhung beigegeben wird, ohne dabei die Eigenschaften des Stoffgemischs wesentlich zu verändern.

Des Weiteren wird vorgeschlagen, dass die Trennlage von einer zusammenhängenden Unterlage gebildet wird, wodurch in besonders einfacher Weise eine zusammenhängende Trennlage an die Unterseite des Materialstrangs angebracht werden kann. In diesem Zusammenhang soll unter einer "zusammenhängenden Unterlage" eine Unterlage verstanden werden, die einteilig ausgebildet ist, wie insbesondere ein Trennpapier, eine Folie, ein Vlies und/oder ein Gewebe, das aus Glas-, Kohlenstoff-, Metall-, Natur- und/oder Chemiefasern gebildet sein kann. Insbesondere kann der Materialstrang durch die zusammenhängende Unterlage bei der Weiterverarbeitung einfach gehandhabt werden.

Besonders vorteilhaft wird die zusammenhängende Unterlage von einem Glasfaservlies gebildet, wodurch die Unterlage besonders vorteilhaft einem Material des Materialstrangs, wie insbesondere einem glasfaserverstärkten Materialstrang, angepasst werden kann.

Des Weiteren wird vorgeschlagen, dass die Trennlage zusammen mit dem Materialstrang weiterverarbeitet wird, wodurch eine aufwendige Trennung von Materialstrang und Trennlage vermieden werden kann und somit zusätzliche Produktionskosten eingespart werden können. So kann beispielsweise die Trennlage zusammen mit dem Materialstrang geschnitten werden und/oder die Trennlage kann zusammen mit dem Materialstrang nach einem Transport in einem Auspressprozess verformt und/oder gepresst werden. Alternativ oder zusätzlich sind weitere, dem Fachmann als sinnvoll erscheinende Verarbeitungsprozesse des Materialstrangs zusammen mit der Trennlage gemäß den beiliegenden Ansprüchen denkbar.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen gemäß den beiliegenden Ansprüchen zusammenfassen.

Es zeigen:
- Fig. 1: eine erfindungsgemäße Vorrichtung zum Transportieren eines Materialstrangs in einer Seitenansicht,
- Fig. 2: eine erfindungsgemäße Vorrichtung zum Transportieren eines Materialstrangs in einer zweiten Ausgestaltung in einer Seitenansicht und
- Fig. 3: eine alternative Ausbringeinheit der Vorrichtung aus Figur 2 in einer Seitenansicht.

### Beschreibung der Ausführungsbeispiele

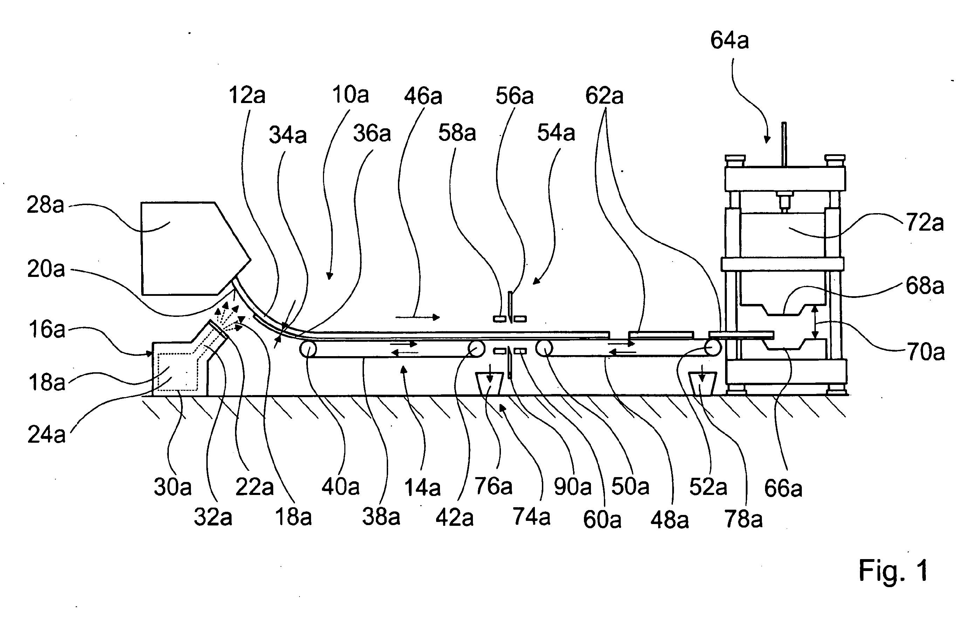

In Figur 1 ist eine Vorrichtung 10a zum Transportieren eines Materialstrangs 12a dargestellt. Die Vorrichtung 10a weist eine Transporteinheit 14a auf, die zum Transportieren des Materialstrangs 12a vorgesehen ist, sowie eine Ausbringeinheit 16a und eine Einheit 28a, die zu einer Ausgabe des Materialstrangs 12a vorgesehen ist. Der Materialstrang 12a verlässt die Einheit 28a in einem aufgeschmolzenen Zustand. Der Materialstrang 12a ist von einem dünnen und klebrigen Kunststoffstrang, wie beispielsweise einem glasfaserverstärkten Kunststoffstrang, gebildet.

Die Ausbringeinheit 16a ist zum direkten Aufbringen eines Trennpulvers 18a auf eine Unterseite 20a des Materialstrangs 12a vorgesehen. Das Trennpulver 18a ist dabei einem Füllstoffmaterial des Materialstrangs 12a angepasst bzw. entspricht einem Füllstoffmaterial des Materialstrangs 12a, so dass die Materialeigenschaften des Materialstrangs 12a durch das Trennpulver 18a unverändert bleiben.

Zum direkten Aufbringen des Trennpulvers 18a auf die Unterseite 20a des Materialstrangs 12a weist die Ausbringeinheit 16a eine Düse 22a auf. Zudem umfasst die Ausbringeinheit 16a eine Heizkammer 30a, in der das Trennpulver 18a zusammen mit einer Fluidisierungsluft 24a auf eine Temperatur des Materialstrangs 12a erwärmt wird. Hierzu verfügt die Heizkammer 30a über nicht näher dargestellte Heizelemente, die das Trennpulver 18a zusammen mit der Fluidisierungsluft 24a auf die gewünschte Temperatur erwärmen, so dass vorteilhaft eine Feuchtigkeitsbildung beim Erwärmen des Trennpulvers 18a vermieden wird. Nach Erreichen der Temperatur des Materialstrangs 12a werden die Fluidisierungsluft 24a und das Trennpulver 18a zusammen über einen Kanal 32a zur Düse 22a der Ausbringeinheit 16a geleitet. Mittels der Düse 22a werden das Trennpulver 18a und die Fluidisierungsluft 24a zusammen fein verteilt auf die Unterseite 20a des klebrigen Materialstrangs 12a aufgesprüht. Das Trennpulver 18a wird dabei mit einer gleichmäßigen Schichtdicke 34a auf die Unterseite 20a des Materialstrangs 12a aufgesprüht. Eine Haftung zwischen dem Trennpulver 18a und dem Materialstrang 12a wird durch eine klebrige Oberfläche der Unterseite 20a des Materialstrangs 12a erreicht.

Der Materialstrang 12a mit einer auf der Unterseite 20a aufgesprühten Trennpulverschicht 36a wird daraufhin mit der die Trennpulverschicht 36a aufweisenden Seite auf einen Transportgurt 38a der Transporteinheit 14a gelegt. Die Transporteinheit 14a umfasst zwei Transportgurte 38a, 48a mit jeweils einem Antriebswälzkörper 40a, 50a und jeweils einem von dem Antriebswälzkörper 40a, 50a mitbewegten Wälzkörper 42a, 52a. Die Transportgurte 38a, 48a sind dabei nacheinander angeordnet, wobei diese jeweils von den Antriebswälzkörpern 40a, 50a und den Wälzkörpern 42a, 52a gespannt werden. Im Betrieb der Transporteinheit 14a werden die Transportgurte 38a, 48a jeweils über die Antriebswälzkörper 40a, 50a angetrieben. Eine Laufrichtung der Transportgurte 38a, 48a ist in Figur 1 mit Pfeilen kenntlich gemacht. Mittels der Transportgurte 38a, 48a wird der Materialstrang 12a von der Einheit 28a in einer Richtung 46a wegtransportiert. Eine Gurtgeschwindigkeit der Transportgurte 38a, 48a und eine Ausgabegeschwindigkeit des Materialstrangs 12a der Einheit 28a sind dabei vorteilhaft aufeinander abgestimmt.

Das Trennpulver 18a zeigt gegenüber den Oberflächen der Transportgurte 38a, 48a eine antihaftende Eigenschaft, so dass ein Ankleben des Materialstrangs 12a an den Transportgurten 38a, 48a vermieden wird. Die Schichtdicke 34a der Trennpulverschicht 36a an der Unterseite 20a des Materialstrangs 12a ist dabei so ausgelegt, dass sie während einer Transportdauer des Materialstrangs 12a auf den Transportgurten 38a, 48a eine Trennung von Materialstrang 12a und Transportgurten 38a, 48a gewährleistet. Bleiben nach einem Abrollen des Materialstrangs 12a Reste des Trennpulvers 18a auf den Transportgurten 38a, 48a zurück, so werden diese von einer Absaugeinheit 74a entfernt. Hierzu weist die Absaugeinheit 74a für jeweils einen Transportgurt 38a, 48a ein Absaugmittel 76a, 78a auf, das die Reste des Trennpulvers 18a an jeweils den Wälzkörpern 42a, 52a zugewandten Enden der Transportgurte 38a, 48a absaugt.

Zur Weiterverarbeitung des Materialstrangs 12a zusammen mit dem Trennpulver 18a ist zwischen den beiden Transportgurten 38a, 48a eine Schneidvorrichtung 54a angeordnet, so dass bei einem Schneiden des Materialstrangs 12a eine Haftung an einem der beiden Transportgurte 38a, 48a vermieden wird. Die Schneidvorrichtung 54a ist zum Schneiden des Materialstrangs 12a vorgesehen und umfasst zwei jeweils von einer Scherenklinge gebildete Schneidmittel 56a, 90a und zwei Klingenführungen 58a, 60a, die jeweils für eines der Schneidmittel 56a, 90a vorgesehen sind. Zum Schneiden wird der Materialstrang 12a zusammen mit dem Trennpulver 18a zur Schneidvorrichtung 54a geführt und von den synchron zueinander auf und zu bewegten Schneidmitteln 56a, 90a durchtrennt. Dabei wird jeweils eines der Schneidmittel 56a, 90a mittels jeweils einer der Klingenführungen 58a, 60a in eine zum Schneiden erforderliche Position gegenüber dem Materialstrang 12a geführt. Vom Materialstrang 12a abgetrennte Strangstücke 62a werden mittels des Transportgurts 48a zu einer Pressvorrichtung 64a weiter transportiert.

Die Pressvorrichtung 64a, die zu einer Formpressung der einzelnen Strangstücke 62a vorgesehen ist, weist ein unteres Formteil 66a und ein oberes Formteil 68a auf, das gegenüber dem unteren Formteil 66a entlang einer vertikaler Achse 70a beweglich angeordnet ist. Das obere Formteil 68a wird während eines Pressvorgangs der Pressvorrichtung 64a mittels eines hydraulisch angetriebenen Presselements 72a auf das untere Formteil 66a gepresst. Grundsätzlich sind jedoch auch mechanische und/oder mit Pressluft angetriebene Pressvorrichtungen in einer weiteren Ausgestaltung der Erfindung jederzeit denkbar. Wird von dem Transportgurt 48a der Transporteinheit 14a ein Strangstück 62a in die Pressvorrichtung 64a auf das untere Formteil 66a geführt, so erfolgt durch das Presselement 72a ein Zusammenpressen des oberen Formteils 68a auf das untere Formteil 66a und das Strangstück 62a wird zusammen mit dem an der Unterseite 20a haftenden Trennpulver 18a in die gewünschte Form gepresst.

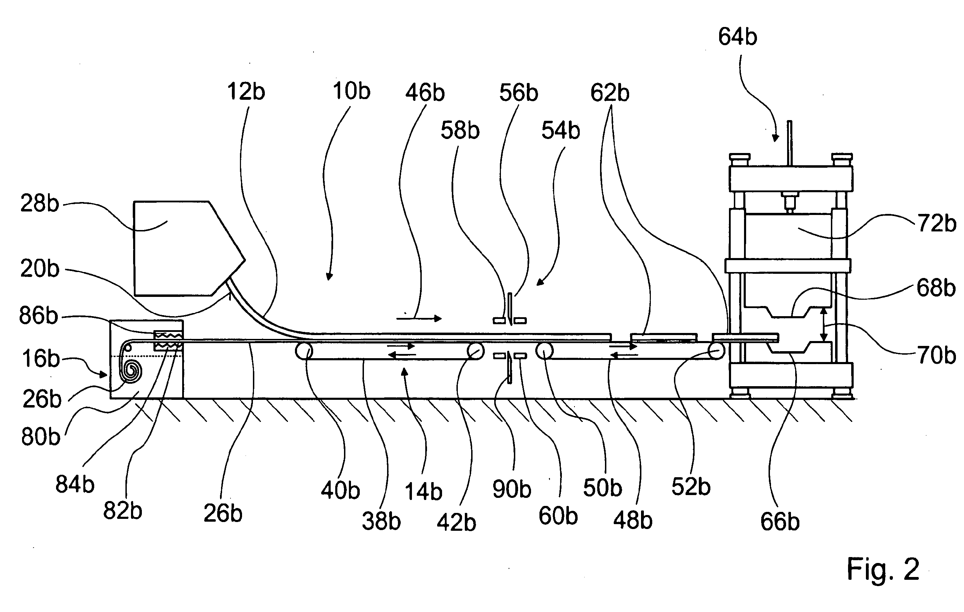

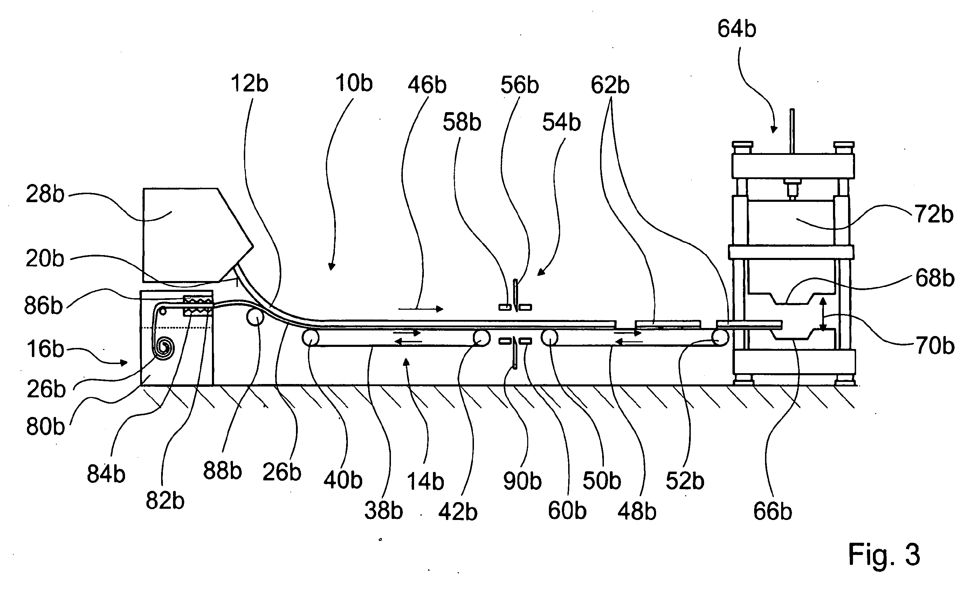

In den Figuren 2 und 3 ist eine weitere Ausgestaltung der Vorrichtung 10b zum Transportieren eines Materialstrangs 12b dargestellt. Bezüglich gleich bleibender Merkmale und Funktionen kann auf die Beschreibung zum Ausführungsbeispiel in Figur 1 verwiesen werden. Sich im Wesentlichen entsprechende Bauteile und Merkmale sind grundsätzlich mit den gleichen Bezugszeichen beziffert, wobei zur Unterscheidung der Ausführungsbeispiele den Bezugszeichen die Buchstaben a (Figur 1) bzw. b (Figuren 2 und 3) hinzugefügt sind. Die in den Figuren 2 und 3 nachfolgende Beschreibung beschränkt sich im Wesentlichen auf die Unterschiede zum Ausführungsbeispiel in Figur 1.

In Figur 2 ist eine Vorrichtung 10b zum Transportieren eines Materialstrangs 12b dargestellt. Die Vorrichtung 10b weist eine Transporteinheit 14b auf, die zum Transportieren des Materialstrangs 12b vorgesehen ist, sowie eine Ausbringeinheit 16b und eine Einheit 28b, die zu einer Ausgabe des Materialstrangs 12b vorgesehen ist. Der Materialstrang 12b verlässt die Einheit 28b in einem aufgeschmolzenen Zustand. Der Materialstrang 12b ist von einem dünnen und klebrigen Kunststoffstrang, wie beispielsweise einem glasfaserverstärkten Kunststoffstrang, gebildet.

Die Ausbringeinheit 16b ist zur Ausgabe einer Trennlage 26b vorgesehen, die eine Trennung von Materialstrang 12b und einem Transportgurt 38b, 48b der Transporteinheit 14b bewirkt. Die Trennlage 26b wird dabei von einem Glasfaservlies gebildet, das eine zusammenhängende und - soweit als erforderlich - flächendeckende Unterlage für den Materialstrang 12b bildet. Die von dem Glasfaservlies gebildete Trennlage 26b ist dabei vorteilhaft einem von Glasfaser gebildeten Verstärkungsmaterial des Materialstrangs 12b angepasst.

Die Ausbringeinheit 16b umfasst eine Aufnahme 80b, einen Ausbringkanal 82b und den Transportgurt 38b. In der Aufnahme 80b ist die Trennlage 26b aufgerollt aufgehängt und wird bei einer Ausbringung abgerollt. Über den Ausbringkanal 82b wird die Trennlage 26b in einem abgerollten Zustand ausgebracht. Der Ausbringkanal 82b ist entlang eines Teilbereichs von Heizelementen 84b, 86b umgeben, die die Trennlage 26b auf eine Temperatur des Materialstrangs 12b vorerwärmen. Die vorerwärmte Trennlage 26b wird auf den Transportgurt 38b aufgebracht und darauf der Materialstrang 12b mit seiner Unterseite 20b voran auf die Trennlage 26b gelegt, so dass die Trennlage 26b zwischen dem Materialstrang 12b und dem Transportgurt 38b angeordnet ist. Die Trennlage 26b haftet dabei an einer klebrigen Oberfläche der Unterseite 20b des Materialstrangs 12b. Zudem weist die Trennlage 26b gegenüber dem Transportgurt 38b antihaftende Eigenschaften auf, so dass ein Ankleben zwischen Materialstrang 12b und Transportgurt 38b vermieden wird.

Eine Weiterverarbeitung des Materialstrangs 12b zusammen mit der Trennlage 26b erfolgt durch die Transporteinheit 14b, eine Schneidvorrichtung 54b und eine Pressvorrichtung 64b. Ein Transportieren, ein Scheidvorgang und ein Pressvorgang des Materialstrangs 12b zusammen mit der Trennlage 26b erfolgen dabei in einer zu den Ausführungen in Figur 1 gleich bleibenden Weise.

In Figur 3 ist eine zu Figur 2 alternative Ausgestaltung einer Ausbringeinheit 16b für eine Trennlage 26b dargestellt. Die Ausbringeinheit 16b umfasst hier eine Aufnahme 80b, einen Ausbringkanal 82b und einen Wälzkörper 88b. Eine Trennlage 26b wird hier durch die Ausbringeinheit 16b direkt auf eine Unterseite 20b eines Materialstrangs 12b aufgebracht. In der Aufnahme 80b ist die Trennlage 26b aufgerollt aufgehängt und wird bei einer Ausbringung abgerollt. Über den Ausbringkanal 82b wird die Trennlage 26b in einem abgerollten Zustand ausgebracht. Der Ausbringkanal 82b ist entlang eines Teilbereichs von Heizelementen 84b, 86b umgeben, die die Trennlage 26b auf eine Temperatur des Materialstrangs 12b vorerwärmen. Die vorgewärmte Trennlage 26b wird über den Wälzkörper 88b direkt auf die Unterseite 20b des Materialstrangs 12b aufgebracht. Der Wälzkörper 88b, über den die Trennlage 26b zum Materialstrang 12b geführt wird, bewirkt, dass die Trennlage 26b an die Unterseite 20b des Materialstrangs 12b angedrückt wird. Durch eine klebrige Oberfläche der Unterseite 20b des Materialstrangs 12b haftet die Trennlage 26b fest an dem Materialstrang 12b. Anschließend wird der Materialstrang 12b mit einer die Trennlage 26b aufweisenden Seite voran auf einen Transportgurt 38b der Transporteinheit 14b gelegt, so dass ein Ankleben des Materialstrangs 12b an den Transportgurt 38b vermieden wird.

### Bezugszeichen

- 10: Vorrichtung
- 12: Materialstrang
- 14: Transporteinheit
- 16: Ausbringeinheit
- 18: Trennpulver
- 20: Unterseite
- 22: Düse
- 24: Fluidisierungsluft
- 26: Trennlage
- 28: Einheit
- 30: Heizkammer
- 32: Kanal
- 34: Schichtdicke
- 36: Trennpulverschicht
- 38: Transportgurt
- 40: Antriebswälzkörper
- 42: Wälzkörper
- 46: Richtung
- 48: Transportgurt
- 50: Antriebswälzkörper
- 52: Wälzkörper
- 54: Schneidvorrichtung
- 56: Schneidmittel
- 58: Klingenführung
- 60: Klingenführung
- 62: Strangstück
- 64: Pressvorrichtung
- 66: unteres Formteil
- 68: oberes Formteil
- 70: Achse
- 72: Presselement
- 74: Absaugeinheit
- 76: Absaugmittel
- 78: Absaugmittel
- 80: Aufnahme
- 82: Ausbringkanal
- 84: Heizelement
- 86: Heizelement
- 88: Wälzkörper
- 90: Schneidmittel

## Patentansprüche

1. Vorrichtung zum Transportieren eines Materialstrangs (12a), insbesondere eines klebrigen Kunststoffstrangs, mit einer einen ersten Transportgurt (38a) aufweisenden Transporteinheit (14a) zum Transportieren des Materialstrangs (12a), einem Trennpulver (18a) und einer Ausbringeinheit (16a) für das Trennpulver (18a), die dazu vorgesehen ist, das Trennpulver (18a) direkt auf eine Unterseite (20a) des Materialstrangs (12a) aufzubringen, bevor der Materialstrang (12a) mit der Unterseite (20a) auf dem ersten Transportgurt (38a) der Transporteinheit (14a) aufliegt, wobei das Trennpulver (18a), das zur Trennung von Materialstrang (12a) und Transportgurt (38a) vorgesehen ist, zum Vermeiden eines Anklebens des Materialstrangs (12a) an dem Transportgurt (38a) gegenüber dem ersten Transportgut (38a) antihaftend ist.

2. Vorrichtung nach Anspruch 1, **dadurch gekennzeichnet, dass**
die Ausbringeinheit (16a) zumindest eine Düse (22a) aufweist, die das Trennpulver (18a) auf die Unterseite (20a) des Materialstrangs (12a) aufsprüht.

3. Vorrichtung nach Anspruch 2, **dadurch gekennzeichnet, dass**
die Ausbringeinheit (16a) dazu vorgesehen ist, das Trennpulver (18a) vor Aufsprühen auf die Unterseite (20a) des Materialstrangs (12a) zu erwärmen.

4. Verfahren zum Transportieren eines Materialstrangs (12a), insbesondere eines klebrigen Kunststoffstrangs, und insbesondere mit einer Vorrichtung nach einem der vorhergehenden Ansprüche, bei welchem der Materialstrang (12a) mittels einer einen ersten Transportgurt (38a) aufweisenden Transporteinheit (14a) transportiert wird, wobei ein Trennpulver (18a), das zur Trennung von Materialstrang (12a) und Transportgurt (38a) vorgesehen ist und das gegenüber dem ersten Transportgurt (38a) antihaftend ist, zum Vermeiden eines Anklebens des Materialstrangs (12a) an dem ersten Transportgurt (38a) direkt auf eine Unterseite (20a) des Materialstrangs (12a) aufgebracht wird, bevor der Materialstrang (12a) auf dem ersten Transportgurt (38a) der Transporteinheit (14a) aufliegt.

5. Verfahren nach Anspruch 4, **dadurch gekennzeichnet, dass** das Trennpulver (18a) zusammen mit einer Fluidisierungsluft (24a) erwärmt wird.

6. Verfahren zumindest nach Anspruch 5, **dadurch gekennzeichnet, dass**
das Trennpulver (18a) zusammen mit der Fluidisierungsluft (24a) auf die Unterseite (20a) des Materialstrangs (12a) aufgesprüht wird.

7. Verfahren nach Anspruch 4 bis 6, **dadurch gekennzeichnet, dass**
ein Material des Trennpulvers (18a) einem Material des Materialstrangs (12a) angepasst wird.

8. Verfahren nach Anspruch 4 bis 7, **dadurch gekennzeichnet, dass**
das Trennpulver (18a) zusammen mit dem Materialstrang (12a) weiterverarbeitet wird.

9. Vorrichtung zum Transportieren eines Materialstrangs (12b), insbesondere eines klebrigen Kunststoffstrangs, mit einer Transporteinheit (14b) zum Transportieren des Materialstrangs (12b) und einer Ausbringeinheit (16b), **dadurch gekennzeichnet, dass**
die Ausbringeinheit (16b) dazu vorgesehen ist, eine von einer zusammenhängenden Unterlage gebildete, in einer Aufnahme (80b) aufgerollt aufgehängte Trennlage (26b) bei einer Ausbringung abzurollen und zur Vermeidung eines Anklebens des Materialstrangs (12b) an einem zum Transport des Materialstrangs (12b) vorgesehenen Bauteil an einer Unterseite (20b) des Materialstrangs (12b) anzubringen.

10. Vorrichtung nach Anspruch 9, **dadurch gekennzeichnet, dass**
die Ausbringeinheit (16b) dazu vorgesehen ist, die Trennlage (26b) zwischen der Unterseite (20b) des Materialstrangs (12b) und der Transporteinheit (14b) anzubringen.

11. Vorrichtung nach den Ansprüchen 9 oder 10, **dadurch gekennzeichnet, dass**
die Ausbringeinheit (16b) dazu vorgesehen ist, die Trennlage (26b) erwärmt zwischen der Unterseite (20b) des Materialstrangs (12b) und der Transporteinheit (14b) anzubringen.

12. Verfahren zum Transportieren eines Materialstrangs (12b), insbesondere eines klebrigen Kunststoffstrangs, insbesondere mit einer Vorrichtung nach einem der Ansprüche 9 bis 11, **dadurch gekennzeichnet, dass** eine zusammenhängende, aufgerollt aufgehängte Trennlage (26b) zur Ausbringung abgerollt und zur Vermeidung eines Anklebens des Materialstrangs (12b) an einem zum Transport des Materialstrangs (12b) vorgesehenen Bauteil an eine Unterseite (20b) des Materialstrangs (12b) angebracht wird.

13. Verfahren nach Anspruch 12, **dadurch gekennzeichnet, dass** die Trennlage (26b) erwärmt zwischen der Unterseite (20b) des Materialstrangs (12b) und der Transporteinheit (14b) angebracht wird.

14. Verfahren nach den Ansprüchen 12 bis 13, **dadurch gekennzeichnet, dass**
ein Material der Trennlage (26b) einem Material des Materialstrangs (12b) angepasst wird.

15. Verfahren nach den Ansprüchen 12 bis 14, **dadurch gekennzeichnet, dass**
die zusammenhängende Unterlage von einem Glasfaservlies gebildet wird.

16. Verfahren nach den Ansprüchen 12 bis 15, **dadurch gekennzeichnet, dass**
die Trennlage (26b) zusammen mit dem Materialstrang (12b) weiterverarbeitet wird.

17. Verfahren nach den Ansprüchen 12 bis 16, **dadurch gekennzeichnet, dass**
die Trennlage (26b) mit dem Materialstrang (12b) verpresst wird.

## Claims

1. Device for transporting a material strand (12a), in particular a sticky plastic strand, with a transport unit (14a) having a first transport belt (38a) for transporting the material strand (12a), a separating powder (18a) and a discharge unit (16a) for the separating powder (18a), which is provided to apply the separating powder (18a) directly onto an underside (20a) of the material strand (12a) before the material strand (12a) bears on the first transport belt (38a) of the transport unit (14a) with the underside (20a), the separating powder (18a), which is provided for separating the material strand (12a) and the transport belt (38a), being non-stick with respect to the first transport belt (38a) in order to avoid adhesion of the material strand (12a) to the first transport belt (38a).

2. Device according to Claim 1, **characterized in that** the discharge unit (16a) exhibits at least one nozzle (22a), which sprays the separating powder (18a) onto the underside (20a) of the material strand (12a).

3. Device according to Claim 2, **characterized in that** the discharge unit (16a) is provided to heat the separating powder (18a) before it is sprayed onto the underside (20a) of the material strand (12a).

4. Method for transporting a material strand (12a), in particular a sticky plastic strand, and in particular having a device according to one of the preceding claims, in which method the material strand (12a) is transported by means of a transport unit (14a) which has a first transport belt (38a), a separating powder (18a), which is provided for separating the material strand (12a) and the transport belt (38a) and which is non-stick with respect to the first transport belt (38a), being applied directly to an underside (20a) of the material strand (12a) in order to avoid adhesion of the material strand (12a) to the first transport belt (38a) before the material strand (12a) bears on the first transport belt (38a) of the transport unit (14a).

5. Method according to Claim 4, **characterized in that** the separating powder (18a) is heated together with fluidization air (24a).

6. Method at least according to Claim 5, **characterized in that** the separating powder (18a) is sprayed onto the underside (20a) of the material strand (12a) together with the fluidization air (24a).

7. Method according to Claims 4 to 6, **characterized in that** a material of the separating powder (18a) is adapted to a material of the material strand (12a).

8. Method according to Claims 4 to 7, **characterized in that** the separating powder (18a) is further processed together with the material strand (12a).

9. Device for transporting a material strand (12b), in particular a sticky plastic strand, having a transport unit (14b) for transporting the material strand (12b) and a discharge unit (16b), **characterized in that** the discharge unit (16b) is provided to unroll, during a discharging operation, a separating layer (26b) which is formed by a contiguous substrate and is suspended rolled up in a receptacle (80b) and, in order to avoid adhesion of the material strand (12b) to a component which is provided for transporting the material strand (12b), to apply the separating layer (26b) onto an underside (20b) of the material strand (12b).

10. Device according to Claim 9, **characterized in that** the discharge unit (16b) is provided to apply the separating layer (26b) between the underside (20b) of the material strand (12b) and the transport unit (14b).

11. Device according to Claim 9 or 10, **characterized in that** the discharge unit (16b) is provided to apply the separating layer (26b), in a heated state, between the underside (20b) of the material strand (12b) and the transport unit (14b).

12. Device for transporting a material strand (12b), in particular a sticky plastic strand, in particular having a device according to one of Claims 9 to 11, **characterized in that** a contiguous separating layer (26b), which is suspended in a rolled up state, is unrolled for discharging and is applied to an underside (20b) of the material strand (12b) in order to avoid adhesion of the material strand (12b) to a component which is provided for transporting the material strand (12b).

13. Method according to Claim 12, **characterized in that** the separating layer (26b) is applied between the underside (20b) of the material strand (12b) and the transport unit (14b) in a heated state.

14. Method according to Claims 12 to 13, **characterized in that** a material of the separating layer (26b) is adapted to a material of the material strand (12b).

15. Method according to Claims 12 to 14, **characterized in that** the contiguous substrate is formed from a non-woven glass fibre fabric.

16. Method according to Claims 12 to 15, **characterized in that** the separating layer (26b) is further processed together with the material strand (12b).

17. Method according to Claims 12 to 16, **characterized in that** the separating layer (26b) is compressed with the material strand (12b).

## Revendications

1. Dispositif de transport d'un extrudat (12a), en particulier d'un extrudat collant de plastique, comprenant une unité de transport (14a) présentant une première courroie de transport (38a) pour le transport de l'extrudat (12a), une poudre de séparation (18a) et une unité de distribution (16a) pour la poudre de séparation (18a), qui est prévue pour appliquer la poudre de séparation (18a) directement sur une face inférieure (20a) de l'extrudat (12a) avant que l'extrudat (12a) ne repose avec sa face inférieure (20a) sur la première courroie de transport (38a) de l'unité de transport (14a), la poudre de séparation (18a), qui est prévue pour la séparation de l'extrudat (12a) et de la courroie de transport (38a), étant antiadhésive par rapport à la première courroie de transport (38a) de manière à éviter une adhésion de l'extrudat (12a) sur la première courroie de transport (38a).

2. Dispositif selon la revendication 1, **caractérisé en ce que**
l'unité de distribution (16a) présente au moins une buse (22a) qui pulvérise la poudre de séparation (18a) sur la face inférieure (20a) de l'extrudat (12a).

3. Dispositif selon la revendication 2, **caractérisé en ce que**
l'unité de distribution (16a) est prévue pour chauffer la poudre de séparation (18a) avant la pulvérisation sur la face inférieure (20a) de l'extrudat (12a).

4. Procédé pour transporter un extrudat (12a), en particulier un extrudat collant de plastique, comprenant notamment un dispositif selon l'une quelconque des revendications précédentes, dans lequel l'extrudat (12a) est transporté au moyen d'une unité de transport (14a) présentant une première courroie de transport (38a), une poudre de séparation (18a), qui est prévue pour séparer l'extrudat (12a) et la courroie de transport (38a) et qui est antiadhésive par rapport à la première courroie de transport (38a), étant appliquée directement sur une face inférieure (20a) de l'extrudat (12a) pour éviter une adhésion de l'extrudat (12a) sur la première courroie de transport (38a), avant que l'extrudat (12a) ne s'applique sur la première courroie de transport (38a) de l'unité de transport (14a).

5. Procédé selon la revendication 4, **caractérisé en ce que** la poudre de séparation (18a) est chauffée conjointement avec de l'air de fluidisation (24a).

6. Procédé selon au moins la revendication 5, **caractérisé en ce que**
la poudre de séparation (18a) est pulvérisée sur la face inférieure (20a) de l'extrudat (12a) conjointement avec l'air de fluidisation (24a).

7. Procédé selon les revendications 4 à 6, **caractérisé en ce qu'**
un matériau de la poudre de séparation (18a) est adapté à un matériau de l'extrudat (12a).

8. Procédé selon les revendications 4 à 7, **caractérisé en ce que**
la poudre de séparation (18a) est alors traitée conjointement avec l'extrudat (12a).

9. Dispositif de transport d'un extrudat (12b), en particulier d'un extrudat collant de plastique, comprenant une unité de transport (14b) pour le transport de l'extrudat (12b) et une unité de distribution (16b), **caractérisé en ce que**
l'unité de distribution (16b) est prévue pour, lors d'une distribution, dérouler une couche de séparation (26b) accrochée sous forme enroulée dans un logement (80b) et formée par un support cohérent, et pour l'appliquer sur une face inférieure (20b) de l'extrudat (12b) afin d'éviter une adhésion de l'extrudat (12b) avec un composant prévu pour le transport de l'extrudat (12b).

10. Dispositif selon la revendication 9, **caractérisé en ce que**
l'unité de distribution (16b) est prévue pour appliquer la couche de séparation (26b) entre la face inférieure (20b) de l'extrudat (12b) et l'unité de transport (14b).

11. Dispositif selon la revendication 9 ou 10, **caractérisé en ce que**
l'unité de distribution (16b) est prévue pour appliquer la couche de séparation (26b) chauffée entre la face inférieure (20b) de l'extrudat (12b) et l'unité de transport (14b).

12. Procédé pour transporter un extrudat (12b), en particulier un extrudat collant de plastique, comprenant notamment un dispositif selon l'une quelconque des revendications 9 à 11, **caractérisé en ce qu'**une couche de séparation cohérente, accrochée sous forme enroulée (26b), est déroulée pour la distribution et est appliquée sur une face inférieure (20b) de l'extrudat (12b) afin d'éviter une adhésion de l'extrudat (12b) avec un composant prévu pour le transport de l'extrudat (12b).

13. Procédé selon la revendication 12, **caractérisé en ce que** la couche de séparation (26b) chauffée est appliquée entre la face inférieure (20b) de l'extrudat (12b) et l'unité de transport (14b).

14. Procédé selon les revendications 12 et 13,
**caractérisé en ce qu'**
un matériau de la couche de séparation (26b) est adapté à un matériau de l'extrudat (12b).

15. Procédé selon les revendications 12 à 14,
**caractérisé en ce que**
le support cohérent est formée par un non-tissé en fibre de verre.

16. Procédé selon les revendications 12 à 15,
**caractérisé en ce que**
la couche de séparation (26b) est alors traitée conjointement avec l'extrudat (12b).

17. Procédé selon les revendications 12 à 16,
**caractérisé en ce que**
la couche de séparation (26b) est pressée avec l'extrudat (12b).
